# EUROPEAN PATENT APPLICATION

(11) **EP 4 807 638 A1**
(43) Date of publication of application: **16.09.2026**
(21) Application number: 26157445.3
(22) Date of filing: 10.02.2026
(51) Int. Cl.: G06Q 10/04, G06Q 10/0637, G06Q 10/067

(54) **CAUSAL MODEL GENERATION METHOD AND CAUSAL MODEL GENERATION PROGRAM**

(30) Priority: 13.03.2025 JP 2025040092
(71) Applicant: FUJITSU LIMITED, Kawasaki-shi, Kanagawa 211-8588 (JP)
(72) Inventor: MIYAZAKI, Nobuhiro, Kawasaki-shi, Kanagawa, 211-8588 (JP); BABA, Takayuki, Kawasaki-shi, Kanagawa, 211-8588 (JP)
(74) Representative: Hoffmann Eitle

(57) **Abstract**

Provided is a causal model generation method that causes a computer to execute a process. The process includes identifying a timing at which the specific event occurred in each of a plurality of second data acquisition ranges in which the specific event previously occurred (S14), evaluating a similarity between a plurality of types of data acquired in each of the plurality of second data acquisition ranges in a focused period before an identified timing and a plurality of types of data acquired in the first data acquisition range (S30 - S42), identifying a second data acquisition range that is most similar to the first data acquisition range in the plurality of second data acquisition ranges based on a result of the evaluating (S44), and generating a causal model when the specific event occurs in the first data acquisition range using data acquired after the specific event occurs in an identified second data acquisition range (S50 - S56).

## Description

### FIELD

A certain aspect of the present embodiments relates to a causal model generation method and a causal model generation program.

### BACKGROUND

There is an increasing use of strategy maps to provide measures that help achieve the objectives of individual companies and organizations. The strategy map is a graph (causal model) including strategy targets (goals) classified into several viewpoints and having a causal relationship set between the goals. For example, when a measure is considered from an analysis result of business data, it is necessary to understand and consider a causal relationship between data.

Recently, various proposals are regarding generation of a causal model (for example, see Non-Patent Document 1: Analysis for Proposing Personalized Lifestyle Improvement Using Bayesian Networks, Journal of the Information Processing Society of Japan, Vol. 65, No. 1, pp. 139 to 150 (2024-01-15), and Patent Document 1: International Publication Pamphlet No. WO2023/223461).

### SUMMARY

At present, the environment surrounding everything has become more complex, and the age of VUCA (Volatility, Uncertainty, Complexity, Ambiguity) has come, where the leading edge of society and business is opaque. In recent years, attention has been paid to predicting an influence on a prediction target when an event with high uncertainty (that is, an event that has not previously occurred) occurs due to an influence of a pandemic caused by COVID-19 or the like. Such events with high uncertainty include measures that have not been taken in each region or each country.

In order to realize prediction in consideration of the influence of an event with high uncertainty, it is necessary to understand what kind of element the event with high uncertainty influences and how the event finally influences a prediction target. However, in a situation where an event with high uncertainty does not occur, there is no data affected by such an event, and thus it is difficult to understand the influence on the prediction target.

In one aspect, the present disclosure provides a causal model generation method and a causal model generation program which are capable of generating a causal model when a specific event occurs in a first data acquisition range where the specific event does not occur.

According to an aspect of the present disclosure, there is provided a causal model generation method that causes a computer to execute a process for generating a causal model when a specific event occurs in a first data acquisition range. The process includes identifying a timing at which the specific event occurred in each of a plurality of second data acquisition ranges in which the specific event previously occurred, evaluating a similarity between a plurality of types of data acquired in each of the plurality of second data acquisition ranges in a focused period before an identified timing and a plurality of types of data acquired in the first data acquisition range, identifying a second data acquisition range that is most similar to the first data acquisition range in the plurality of second data acquisition ranges based on a result of the evaluating, and generating a causal model when the specific event occurs in the first data acquisition range using data acquired after the specific event occurs in an identified second data acquisition range.

### BRIEF DESCRIPTION OF THE DRAWINGS

FIG. 1 is a diagram schematically illustrating a configuration of a causal model generation system according to a first embodiment.
FIG. 2 is a diagram for explaining an overview of processing of a server according to the first embodiment (part 1).
FIG. 3 is a diagram for explaining an overview of processing of the server according to the first embodiment (part 2).
FIG. 4 is a diagram for explaining an overview of processing of the server according to the first embodiment (part 3).
FIG. 5A is a diagram illustrating a hardware configuration of a user terminal.
FIG. 5B is a diagram illustrating a hardware configuration of a server.
FIG. 6 is a functional block diagram of a user terminal and a server.
FIG. 7 is a diagram illustrating an example of a target data DB.
FIG. 8 is a diagram illustrating an example of a preceding data DB.
FIG. 9 is a flowchart illustrating the processing of an event occurrence timing identifying unit of the server.
FIG. 10 is a flowchart illustrating the processing of a similarity evaluation unit of the server.
FIG. 11 is a flowchart illustrating processing of a causal model generation unit of the server.
FIG. 12 is a diagram illustrating an example of a similarity table included in the similarity evaluation unit.
FIG. 13 is a diagram illustrating an example of a causal model.
FIG. 14 is a flowchart illustrating processing of an event occurrence timing identifying unit according to a second embodiment.
FIG. 15 is a diagram for explaining an event flag set in the preceding data (Europe) in the second embodiment.
FIG. 16 is a diagram illustrating a range for evaluating the similarity between the target data and the preceding data in the second embodiment by a broken line frame.

### EFFECT

According to one aspect, it is possible to generate a causal model when a specific event occurs in a first data acquisition range where the specific event does not occur.

### DESCRIPTION OF EMBODIMENTS

### [First Embodiment]

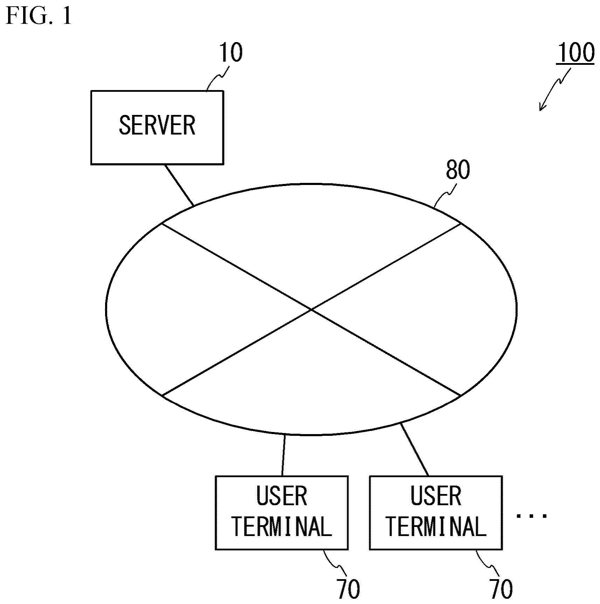

Hereinafter, a first embodiment of a causal model generation system will be described in detail with reference to FIGs. 1 to 13.

FIG. 1 schematically illustrates a configuration of a causal model generation system 100 according to a first embodiment. As illustrated in FIG. 1, the causal model generation system 100 includes a user terminal 70 and a server 10. The user terminal 70 and the server 10 are connected to a network 80 such as the Internet.

In the present embodiment, the server 10 analyzes various data input from the user terminal 70 to the server 10 and performs causal analysis. The server 10 outputs the causal model generated by the causal analysis to the user terminal 70. Accordingly, the causal model is displayed on the user terminal 70, and thus the user can perform various predictions and examinations using the causal model.

For example, suppose that various data relating to electric vehicles (EVs) are analyzed in causal analysis. In this case, as the causal information, information such as "charging speed becomes faster" -> "the share of EV sales increases" -> "the number of owned EV increases" -> "the ratio of owned EV increases" -> "the number of sold EVs increases" is obtained. In the case of performing such causal analysis, for example, a technique as in the above-mentioned Non-Patent Document 1 is used.

In relation to the causal analysis as described above, for example, when an event "EV subsidy support increases by α % in Japan" occurs, there is a case where it is desired to know what influence the event has on the causal relation. In this case, when an event that the EV subsidy assistance increases by α % has not previously occurred in Japan, that is, when the event is an event with high uncertainty, there is no data after the event occurred. In this case, the influence of the event cannot be reflected in the causal analysis.

In the causal model generation system 100 of the present embodiment, in order to obtain causal information in a case where such an event with high uncertainty occurs, the causal analysis is performed using data of another region where the event occurred.

Hereinafter, an outline of processing performed by the server 10 of the present embodiment will be described.

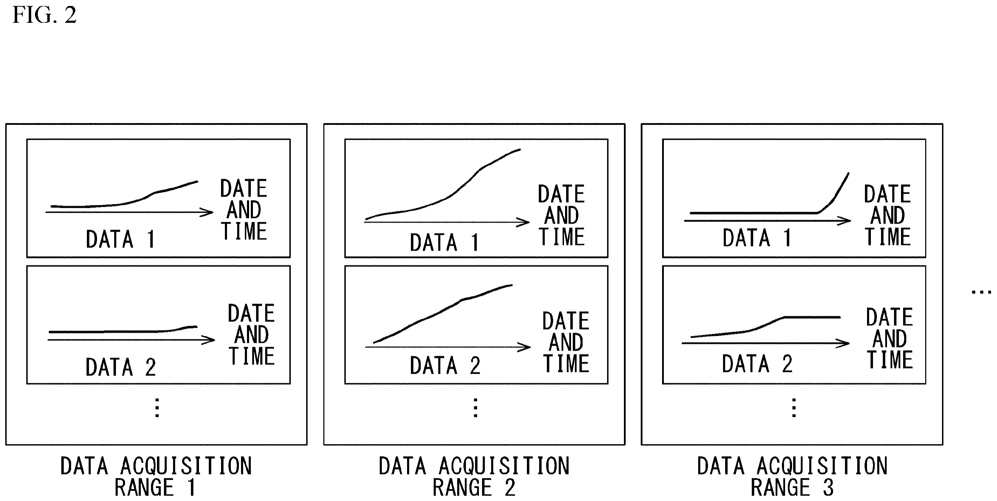

As an example, as illustrated in FIG. 2, it is assumed that there are a data acquisition range 1 (for example, Japan) in which the specific event does not occur and data acquisition ranges 2, 3, 4,., N (for example, Europe, USA, and the like) in which the specific event previously occurred. The data acquisition range may be a country or a region, or may be a data extraction range set in advance by the user.

In addition, it is assumed that a plurality of types of data 1, 2, ... , L can be acquired in each data acquisition range as illustrated in FIG. 2. The plurality of types of data are, for example, data related to an EV. For example, the data related to the EV includes time-series data of the number of charging stations, time-series data of the sales price of the EV, time-series data of the cruising distance of the EV, time-series data of the charging speed of the EV, time-series data of the number of sales of the EV, and the like. Note that data having the same number (data 1, data 2, ...) in the data acquired in the respective data acquisition ranges are the same type of data (data having the same item on the vertical axis).

In such a situation, it is assumed that a request for content of "generate a causal model for x years after a specific event occurs in the data acquisition range 1" is input from the user terminal 70 to the server 10. In this case, the server 10 executes the following processing.

### (Identification of Occurrence Timing of Specific Event)

The server 10 identifies the timing at which the specific event previously occurred in the data acquisition ranges (2, 3, ... , N) other than the data acquisition range 1. In this case, the server 10 may specify the timing based on, for example, information input by a person. The server 10 may specify the timing by interacting with large language models (LLM) (inputting a question sentence) or may specify the timing from information existing on the Internet.

### (Similarity Evaluation of Data Acquisition Range 1 and Other Data Acquisition Ranges)

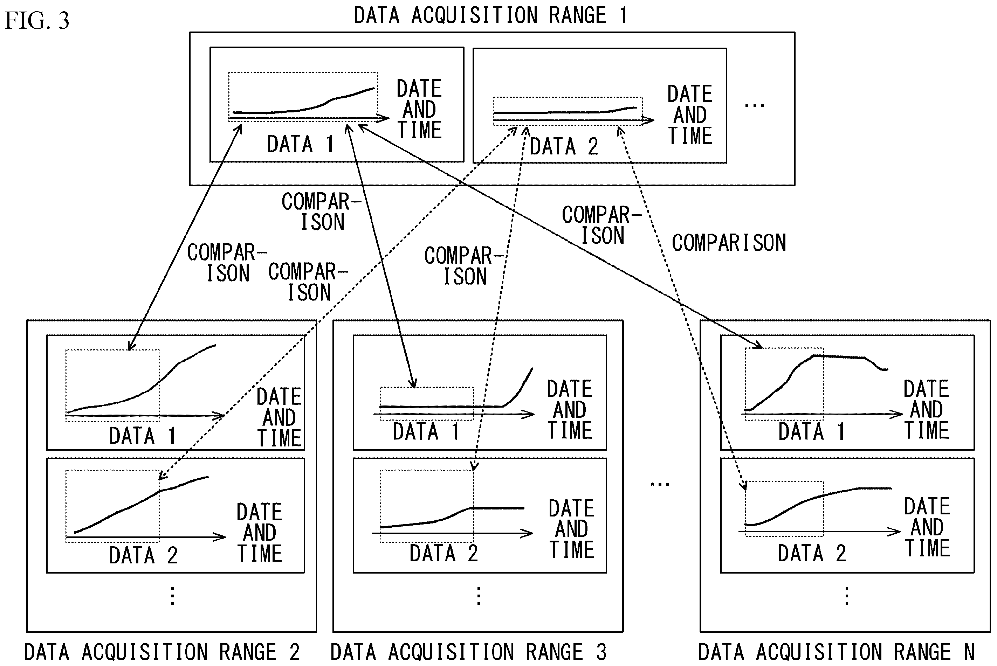

After the timing at which the specific event previously occurred is identified in the data acquisition range (2, 3, ... , N) as described above, the server 10 evaluates the similarity between the data acquisition range 1 and each of the other data acquisition ranges 2, 3, ... , N. Specifically, as illustrated in FIG. 3, the server 10 compares the data 1 of the data acquisition range 1 with data (data in a range surrounded by a broken line frame in FIG. 3) in a period (focused period) before a timing at which a specific event occurred in the data 1 of each of the other data acquisition ranges 2, 3,., and N. Then, the server 10 evaluates the similarity between the data (calculates the degree of similarity). The server 10 compares the data 2 in the data acquisition range 1 with data in a period before the timing at which the specific event occurred in the data 2 of each of the other data acquisition ranges 2, 3, ... , and evaluates the similarity. The same applies to the other data 3, 4 and so on.

Then, the server 10 evaluates the similarity (calculates the degree of similarity) between the data acquisition range 1 and each of the other data acquisition ranges 2, 3, ... , N based on the similarity of each data, and identifies the data acquisition range most similar to the data acquisition range 1. For example, in FIG. 3, it is assumed that the data acquisition range 3 is identified as the data acquisition range most similar to the data acquisition range 1.

### (Causal Analysis Using Data of Most Similar Data Acquisition Range)

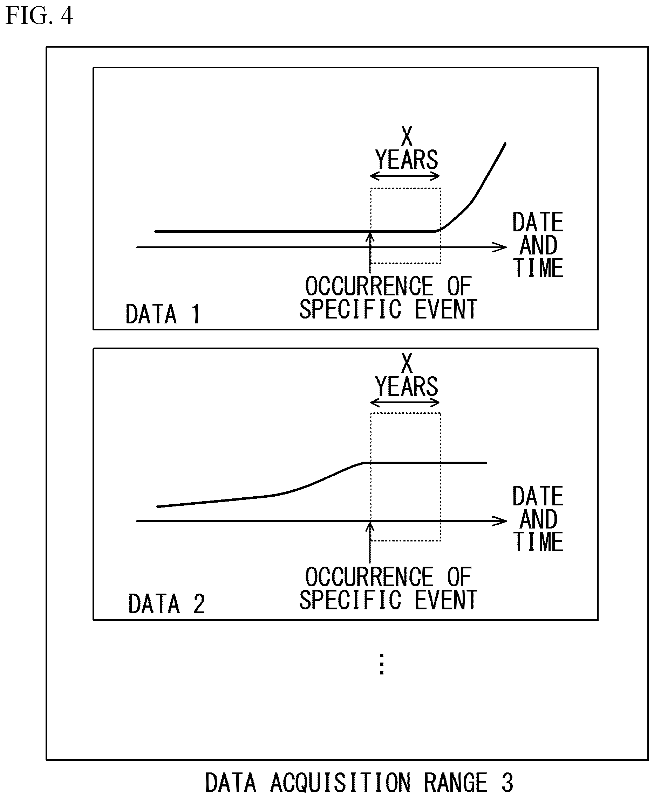

Thereafter, as indicated by a broken line frame in FIG. 4, the server 10 acquires data (data in the broken line frame) from the timing at which the specific event occurs to x years later from the data in the data acquisition range 3 most similar to the data acquisition range 1. Then, the server 10 analyzes a causal relationship between the data using the acquired data, generates a causal model, and outputs the generated causal model to the user terminal 70 as the causal model of the data acquisition range 1.

As described above, in the present embodiment, the server 10 identifies the data acquisition range in which the tendency of the data before the specific event occurs is most similar to the tendency of the data of the data acquisition range 1. Then, the server 10 generates the causal model using data after the specific event occurred in the data in the identified data acquisition range, and handles the generated causal model as the causal model when the specific event occurred in the data acquisition range 1. Accordingly, even if the specific event has not occurred yet in the data acquisition range 1, it is possible to estimate the causal model in a case where the specific event occurs. Accordingly, the user can predict and understand what kind of influence occurs when a specific event occurs in the data acquisition range 1 by referring to the causal model.

When generating the causal model, the server 10 may analyze the causal relationship using not only the data of the data acquisition range 3 most similar to the data acquisition range 1 but also the data of the data acquisition range 1 to generate the causal model.

### (Details of Causal Model Generation System 100)

Next, details of the causal model generation system 100 (configurations of the server 10 and the user terminal 70, processing of the server 10, and the like) will be described with reference to the drawings.

### (Hardware Configuration of User Terminal 70)

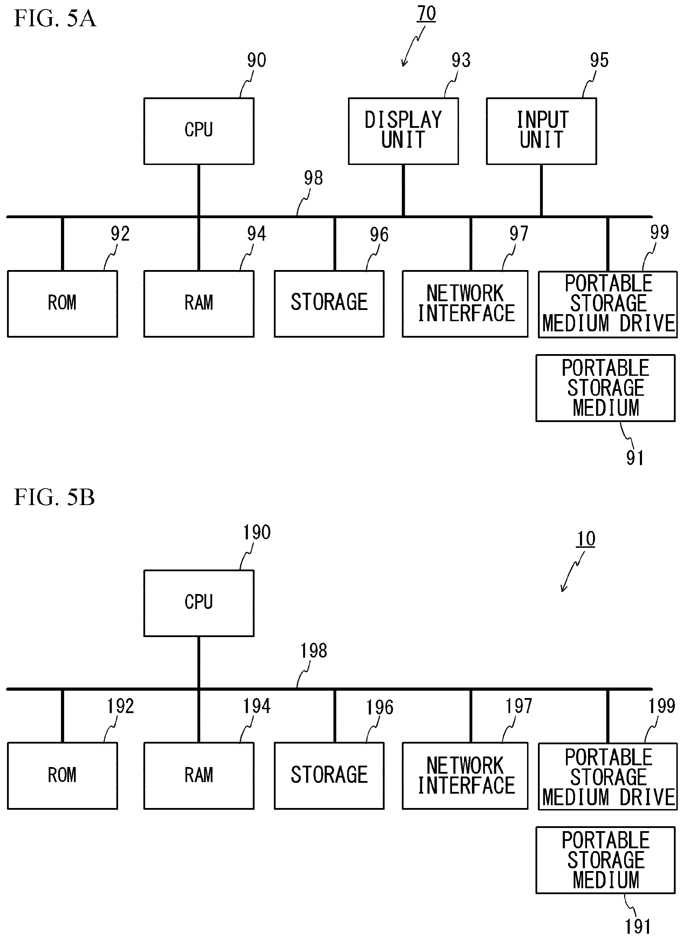

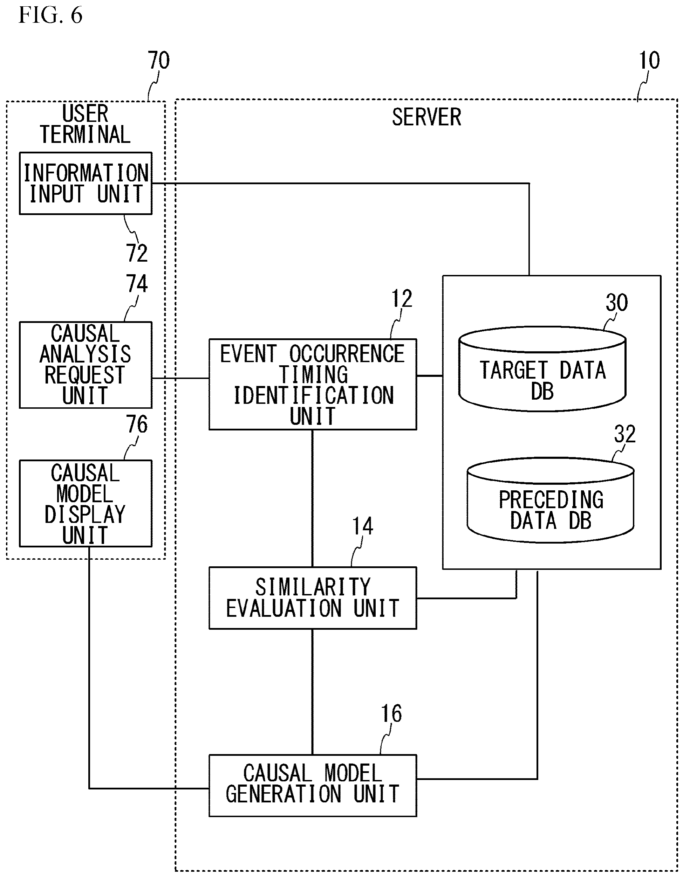

The user terminal 70 is a terminal such as a personal computer (PC) used by a user. FIG. 5A illustrates a hardware configuration of the user terminal 70. As illustrated in FIG. 5A, the user terminal 70 includes a central processing unit (CPU) 90, a read only memory (ROM) 92, a random access memory (RAM) 94, a storage (a solid state drive (SSD) or a hard disk drive (HDD)) 96, a network interface 97, a display unit 93, an input unit 95, a portable storage medium drive 99, and the like. The display unit 93 includes a liquid crystal display or the like, and the input unit 95 includes a keyboard, a mouse, a touch panel, or the like. These components of the user terminal 70 are connected to a bus 98. In the user terminal 70, the CPU 90 executes a program stored in the ROM 92 or the storage 96 or a program read from a portable storage medium 91 by the portable storage medium drive 99, thereby implementing the functions of the respective units illustrated in FIG. 6.

### (Hardware Configuration of Server 10)

The server 10 is an information processing apparatus that analyzes a causal relationship between data and outputs the analysis result as a causal graph to the user terminal 70. FIG. 5B illustrates the hardware configuration of the server 10. As illustrated in FIG. 5B, the server 10 includes a CPU (Central Processing Unit) 190, a ROM (Read Only Memory) 192, a RAM (Random Access Memory) 194, a storage (solid state drive (SSD) and hard disk drive (HDD)) 196, a network interface 197, a portable storage medium drive 199, and the like. These components of the server 10 are connected to a bus 198. In the server 10, the CPU 190 executes a program (including the causal model generation program) stored in the ROM 192 or the storage 196 or a program read from the portable storage medium 191 by the portable storage medium drive 199, thereby realizing the functions of the respective units illustrated in FIG. 6. FIG. 6 also illustrates various tables stored in the storage 196 or the like of the server 10. The functions of the respective units in FIG. 6 may be implemented by an integrated circuit such as an application specific integrated circuit (ASIC) or a field programmable gate array (FPGA).

### (Functions of User Terminal 70 and Server 10)

FIG. 6 illustrates a functional block diagram of the user terminal 70 and the server 10. As illustrated in FIG. 6, in the user terminal 70, the CPU 90 executes a program to function as an information input unit 72, a causal analysis request unit 74, and a causal model display unit 76. On the other hand, in the server 10, the CPU 190 executes a program to function as an event occurrence timing identifying unit 12, a similarity evaluation unit 14, and a causal model generation unit 16.

### (Each Function of User Terminal 70)

The information input unit 72 receives an input of data (target data) of a data acquisition range which is a target of causal analysis by the user or data (preceding data) of another data acquisition range via the input unit 95, and transmits the data to the server 10. Here, the target data is data of the data acquisition range 1 described above, that is, data of the data acquisition range in which a specific event does not occur (data related to the EV in Japan). The preceding data is data of the data acquisition ranges 2, 3, ... , N described above, that is, data of the data acquisition ranges in which a specific event previously occurred (data related to the EV in USA and Europe). The target data transmitted to the server 10 is stored in a target data DB 30, and the preceding data is stored in a preceding data DB 32. The data acquisition range of the target data is a first data acquisition range, and the data acquisition range of the preceding data is a second data acquisition range.

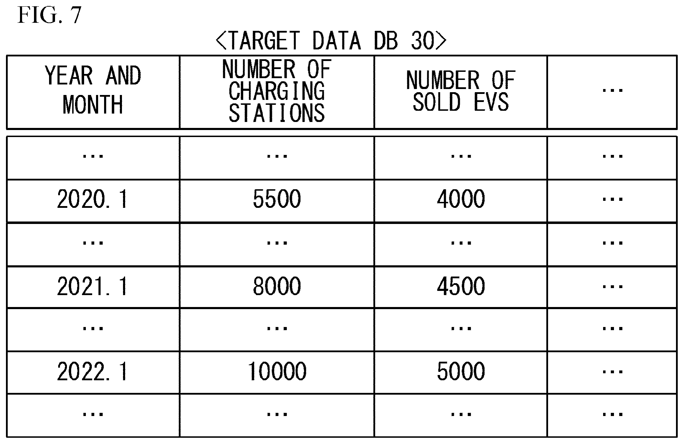

The target data DB 30 is assumed to be a data as illustrated in FIG. 7. Specifically, the target data DB 30 includes various types of time-series data such as time-series data (data 1) of the number of charging stations in Japan and time-series data (data 2) of the number of sold EVs in Japan.

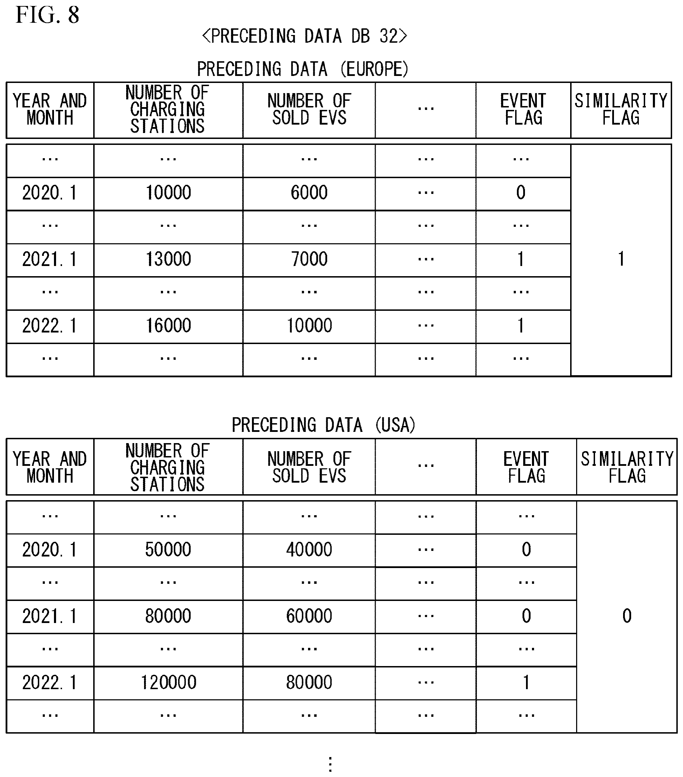

As illustrated in FIG. 8, the preceding data DB 32 includes pieces of preceding data obtained in a plurality of data acquisition ranges (Europe, USA, and the like). The preceding data (Europe) stores various types of time-series data such as time-series data (data 1) of the number of charging stations in Europe and time-series data (data 2) of the number of sold EVs in Europe. In addition, the preceding data (Europe) is provided with input fields for an event flag and a similarity flag. The event flag can be set to "0" or "1" for each year and month, and the initial value is "0". When the event flag is "0", it means that the specific event has not occurred in the year and month, and when the event flag is "1", it means that the specific event occurred in the year and month. The similarity flag can be set to "0" or "1", and the initial value is "0". When the similarity flag is "0", it means that the data acquisition range is not the most similar to the data acquisition range of the target data, and when the similarity flag is "1", it means that the data acquisition range is the most similar to the data acquisition range of the target data.

Returning to FIG. 6, when the user requests the start of the causal analysis via the input unit 95, the causal analysis request unit 74 requests the server 10 (the event occurrence timing identifying unit 12) to perform the causal analysis. In the request, the user inputs a request such as "generate the causal model after two years from the start of the operation of the subsidy system for purchasing the EV in the data acquisition range (Japan) of the target data". In this case, the "subsidy system for purchasing the EV" is a system that has not been realized in Japan. That is, "the start of the operation of the subsidy system for the purchase of the EV" can be said to be an event with high uncertainty in Japan.

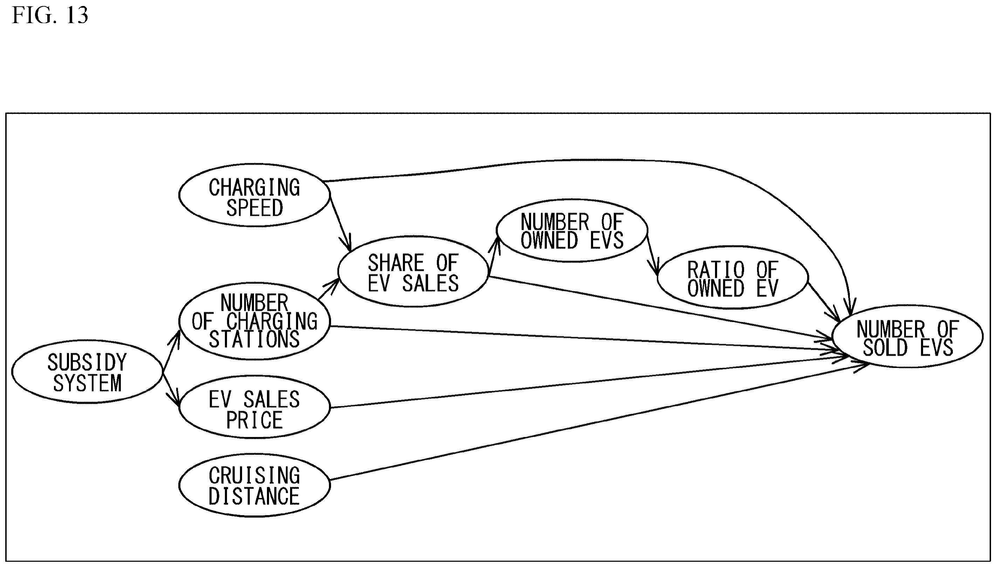

The causal model display unit 76 receives the causal model (for example, see FIG. 13) output from the server 10 and displays the causal model on the display unit 93.

### (Each Function of Server 10)

The event occurrence timing identifying unit 12 identifies a timing at which a specific event previously occurred (a timing at which the operation of the subsidy system for purchasing the EV was started) in a data acquisition range (Europe or USA) in which the preceding data was acquired. In this case, when the user inputs the timing at which the user starts the operation of the subsidy system for purchasing the EV in Europe or USA, the event occurrence timing identifying unit 12 may use the input information as it is. As described above, the event occurrence timing identifying unit 12 may specify the operation start timing using the LLM or the Internet.

The similarity evaluation unit 14 evaluates the similarity between the target data and each of the preceding data, thereby specifying the data acquisition range of the preceding data most similar to the data acquisition range of the target data. The details of the processing of the similarity evaluation unit 14 will be described later.

The causal model generation unit 16 searches for a causal relationship by a known causal search method based on the preceding data of the data acquisition range evaluated as being most similar by the similarity evaluation unit 14, and generates the causal model. The causal relationship includes information (cause and effect) indicating the causal relationship and a causal coefficient indicating the influence of the causal relationship. Examples of the causal search method include linear non-gaussian acyclic model (LiNGAM), structural agnostic modelling (SAM), Bayesian network, and linear non-gaussian SEM (LiNG), but are not limited to them. The causal model generation unit 16 outputs the generated causal model to the user terminal 70 (the causal model display unit 76).

### (Details of Processing of Server 10)

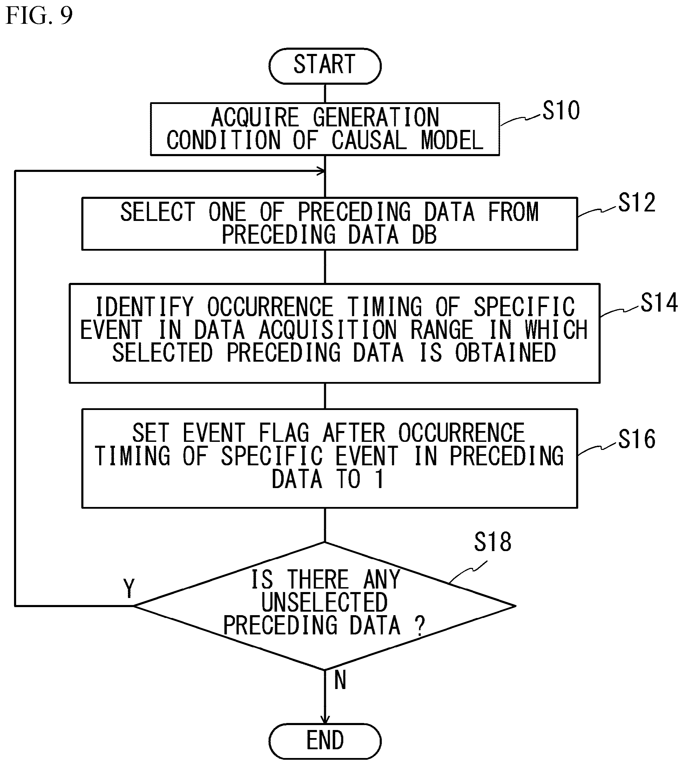

Next, the processing of the server 10 will be described in detail with reference to the flowcharts of FIGs. 9 to 11 and other drawings.

### (Processing of FIG. 9 (Processing of Event Occurrence Timing Identifying unit 12))

FIG. 9 is a flowchart illustrating the processing of the event occurrence timing identifying unit 12. The processing of FIG. 9 is started when a request to start the causal analysis is made from the user terminal 70 (the causal analysis request unit 74). Here, it is assumed that the user inputs a request to "generate the causal model after two years from the start of the operation of the subsidy system for purchasing the EV in the data acquisition range (Japan) of the target data".

When the processing of FIG. 9 is started, first, in step S10, the event occurrence timing identifying unit 12 acquires a causal model generation condition "generate the causal model after two years from the start of the operation of the subsidy system for purchasing the EV in the data acquisition range (Japan) of the target data" input by the user.

Next, in step S12, the event occurrence timing identifying unit 12 selects one of the preceding data from the preceding data DB 32. For example, the event occurrence timing identifying unit 12 selects "preceding data (Europe)" in FIG. 8. It is assumed that, at this stage, all the event flags are "0" and the similarity flag is also "0".

Next, in step S14, the event occurrence timing identifying unit 12 identifies the occurrence timing of the specific event in the data acquisition range in which the selected preceding data is obtained. In this case, the event occurrence timing identifying unit 12 identifies timing when the operation of the subsidy system for purchasing the EV is started in Europe, using the input information of the user, the LLM, the Internet, or the like.

Next, in step S16, the event occurrence timing identifying unit 12 sets the event flag after the occurrence timing of the specific event in the preceding data to 1. For example, when the occurrence timing of the specific event is identified as "January 2021" in the step S14, all the event flags after January 2021 are set to "1".

Next, in step S18, the event occurrence timing identifying unit 12 determines whether there is any unselected preceding data. If the determination in step S18 is positive, the process returns to step S12.

Thereafter, the processing and determination of steps S12 to S18 are repeated, and the entire processing of FIG. 9 ends at the stage where the determination of step S18 is negative. As illustrated in FIG. 8, in USA, the occurrence timing of the specific event is January 2022, and thus the event flag after January 2022 is set to "1".

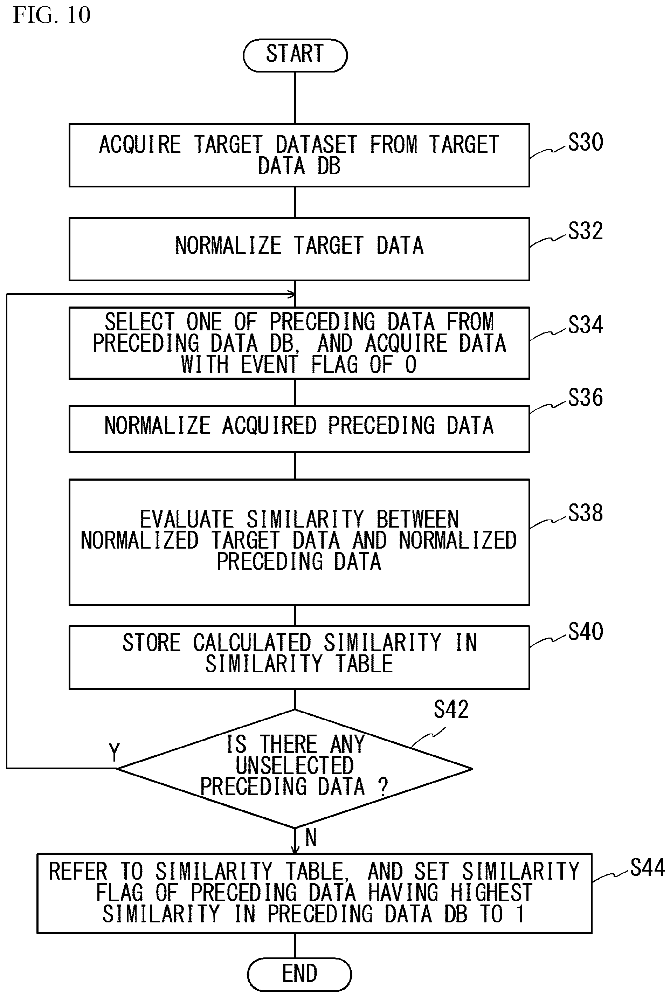

### (Processing of FIG. 10 (Processing of Similarity Evaluation Unit 14))

Next, the processing of the similarity evaluation unit 14 will be described in detail based on the flowchart of FIG. 10. The processing of FIG. 10 is started from the stage where the processing of FIG. 9 is completed.

When the processing of FIG. 10 is started, first, in step S30, the similarity evaluation unit 14 acquires the target data from the target data DB 30.

Next, in step S32, the similarity evaluation unit 14 normalizes the target data. Here, the normalization is performed so that the range of the target data (the range that the values on the vertical axis in FIG. 2 can take) becomes values between 0.0 and 1.0.

Next, in step S34, the similarity evaluation unit 14 selects one of the preceding data from the preceding data DB 32, and acquires the data with the event flag of "0". For example, the similarity evaluation unit 14 selects the preceding data (Europe) in FIG. 8, and acquires data before January 2021 in which the event flag is 0 in the selected preceding data. Note that the data acquired here can be said to be data in a focused period before the timing at which the specific event occurs.

Next, in step S36, the similarity evaluation unit 14 normalizes the acquired preceding data. In this case, the similarity evaluation unit 14 performs normalization so that the range of the preceding data (the range that the values on the vertical axis in FIG. 2 can take) becomes values between 0.0 and 1.0.

Next, in step S38, the similarity evaluation unit 14 evaluates the similarity between the normalized target data and the normalized preceding data, and evaluates the similarity between the data acquisition range of the target data and the data acquisition range of the preceding data.

Here, the i-th value of data j, which is one of the L types of data of target data t, is denoted by xₜᵢⱼ, and the i-th value of data j, which is one of the L types of data of preceding data n, is denoted by xₙᵢⱼ. Here, the number of data i is a value of 1 to M, and the number of types of data j is a value of 1 to L.

In this case, the similarity evaluation unit 14 obtains a similarity simₙ between the data acquisition range of the target data t and the data acquisition range of the preceding data n from the following Equation (1). In this case, the similarity is the average of the sum of the average absolute errors of all the data.
[Equation 1] ${sim}_{n} = 1 - \frac{1}{L} {\sum }_{j = 1}^{L} \left\{\frac{1}{M}{\sum }_{i = 1}^{M} \left|{x}_{tij}-{x}_{nij}\right|\right\}$

In the present embodiment, since the target data and the preceding data are normalized, the value of the right side of the above Equation (1) is a value within a range of 0 to 1, and the larger the simₙ value, the higher the similarity.

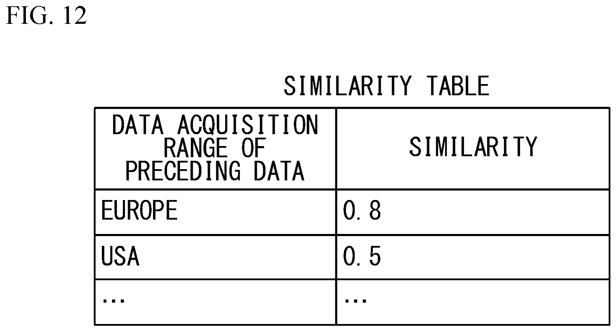

In step S40, the similarity evaluation unit 14 stores the calculated similarity in the similarity table (FIG. 12) included in the similarity evaluation unit 14. The similarity table is a table that stores the calculated similarity value in association with the data acquisition range of the preceding data.

Next, in step S42, the similarity evaluation unit 14 determines whether there is any unselected preceding data. When the determination in step S42 is positive, the processing returns to step S34, and the processing and determination in steps S34 to S42 are repeatedly executed. When the determination in step S42 is negative, the processing proceeds to step S44.

When the processing proceeds to step S44, the similarity evaluation unit 14 refers to the similarity table (FIG. 12) and sets the similarity flag of the preceding data having the highest similarity in the preceding data DB 32 to 1. When the similarity of the "preceding data (Europe)" is the highest, the similarity flag of the preceding data (Europe) is set to "1" as illustrated in FIG. 8.

When the above processing is completed, the entire processing of FIG. 10 is completed.

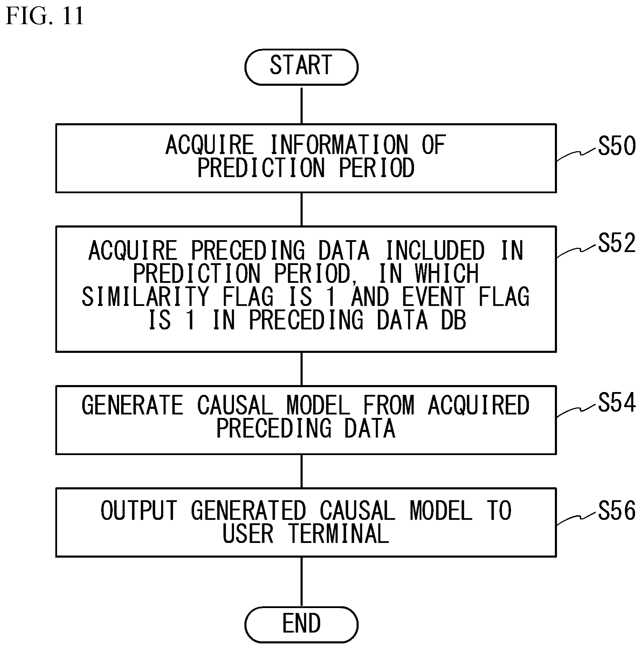

### (Processing of FIG. 11 (Processing of Causal Model Generation Unit 16))

Next, the processing of the causal model generation unit 16 will be described in detail based on the flowchart of FIG. 11. The processing of FIG. 11 is started from a stage where the processing of FIG. 10 is completed.

When the processing of FIG. 11 is started, first, in step S50, the causal model generation unit 16 acquires information of a prediction period. In this case, "two years" is acquired from the causal model generation condition "generate the causal model after two years from the operation of the subsidy system for purchasing the EV is started in the data acquisition range (Japan) of the target data" input by the user.

Next, in step S52, the causal model generation unit 16 acquires the preceding data included in the prediction period (two years), in which the similarity flag is 1 and the event flag is 1 in the preceding data DB 32. In the example of FIG. 8, data from January 2021 to two years later (data from January 2021 to January 2023) with an event flag of 1 is acquired from in the preceding data (Europe) with a similarity flag of 1.

Next, in step S54, the causal model generation unit 16 generates the causal model from the acquired preceding data. As a result, the causal model as illustrated in FIG. 13 is generated. The causal model of FIG. 13 includes causal relationships caused by the start of the operation of the subsidy system, such as "the operation of the subsidy system is started" - > "the number of charging stations increases" and "the operation of the subsidy system is started" -> "the sales price of the EV decreases".

Next, in step S56, the causal model generation unit 16 outputs the generated causal model to the user terminal 70. Accordingly, since the screen as illustrated in FIG. 13 is displayed on the display unit 93 of the user terminal 70, the user can understand what happens until two years later from timing when the subsidy system for purchasing the EV is started in Japan.

As described above in detail, according to the first embodiment, when generating the causal model when a specific event occurs in a data acquisition range in which the specific event does not occur, the event occurrence timing identifying unit 12 identifies a timing at which the specific event occurred in each of a plurality of data acquisition ranges in which the specific event previously occurred (FIG. 9). The similarity evaluation unit 14 evaluates the similarity between the preceding data in a period (focused period) before the timing at which the specific event occurred and the target data obtained in the data acquisition range (FIG. 10: S30 to S42). Then, the similarity evaluation unit 14 identifies a data acquisition range that is the most similar to the data acquisition range of the target data in the data acquisition ranges of the plurality of preceding data based on the evaluation result (S44). Further, the causal model generation unit 16 generates the causal model when the specific event occurs in the data acquisition range in which the specific event does not occur, using the data acquired after the specific event occurs in the most similar data acquisition range (FIG. 11). That is, when there is no data after the specific event occurs in the data acquisition range in which the target data is acquired, the causal model is generated using the preceding data obtained in the data acquisition range most similar to the data acquisition range. Then, the generated causal model is handled as the causal model after the specific event occurs in the data acquisition range in which the target data is acquired. Accordingly, it is possible to accurately generate the causal model when the specific event occurs in the data acquisition range where the specific event does not occur.

### (First Modification)

In the first embodiment, the similarity simₙ is calculated using the above equation (1), but the present disclosure is not limited to this.

For example, when the data to be predicted is the "number of sold EVs", data having a correlation with the time-series data of the "number of sold EVs" equal to or greater than a predetermined threshold may be identified in advance. In this case, when there are L' types of data having the correlation equal to or greater than the predetermined threshold, the similarity simₙ can be calculated by the following Equation (2).
[Equation 2] ${sim}_{n} = 1 - \frac{1}{L ′} {\sum }_{j = 1}^{L ′} \left\{\frac{1}{M}{\sum }_{i = 1}^{M} \left|{x}_{tij}-{x}_{nij}\right|\right\}$

### (Second Modification)

In addition, for example, there is a case where an expert or the like can weight each of a plurality of types of data in advance. In such a case, the similarity simₙ may be calculated by the following Equation (3), where the weight of each type of data j is αⱼ. The weight αⱼ takes a value between 0 and 1, and when the data to be predicted is the "number of sold EVs", the weight αⱼ of the data j having a higher relevance to the time-series data of the "number of sold EVs" has a larger value.
[Equation 3] ${sim}_{n} = 1 - \frac{1}{L} {\sum }_{j = 1}^{L} {α}_{j} \left\{\frac{1}{M}{\sum }_{i = 1}^{M} \left|{x}_{tij}-{x}_{nij}\right|\right\}$

### (Third Modification)

Further, for example, the similarity simₙ may be calculated by the following equation (4), where βⱼ is a weight based on the variance of each of the plurality of types of data. Note that σⱼ is a standard deviation of the data j, and the use of the weight βⱼ can suppress the influence of data whose similarity tends to be low.
[Equation 4] ${sim}_{n} = 1 - \frac{1}{L} {\sum }_{j = 1}^{L} {β}_{j} \left\{\frac{1}{M}{\sum }_{i = 1}^{M} \left|{x}_{tij}-{x}_{nij}\right|\right\}$ where ${β}_{j} = 1 - \frac{{σ}_{j}^{2}}{{\sum }_{j = 1}^{L} {σ}_{j}^{2}}$

### (Second Embodiment)

Hereinafter, a second embodiment will be described. In the second embodiment, a description will be given of a method of generating the causal model in a case where the specific event occurs after a predetermined period of time has elapsed (after a first time period) from the present in the data acquisition range (for example, Japan) of target data.

In the second embodiment, the user is assumed to input a generation condition of the causal model such as, "In the data acquisition range (Japan) of the target data, the operation of the subsidy system for purchasing the EV is started one year after the present. The causal model after two years from the start of operation is generated". In this case, it can be said that the generation condition is based on the assumption that the specific event occurs one year after the present.

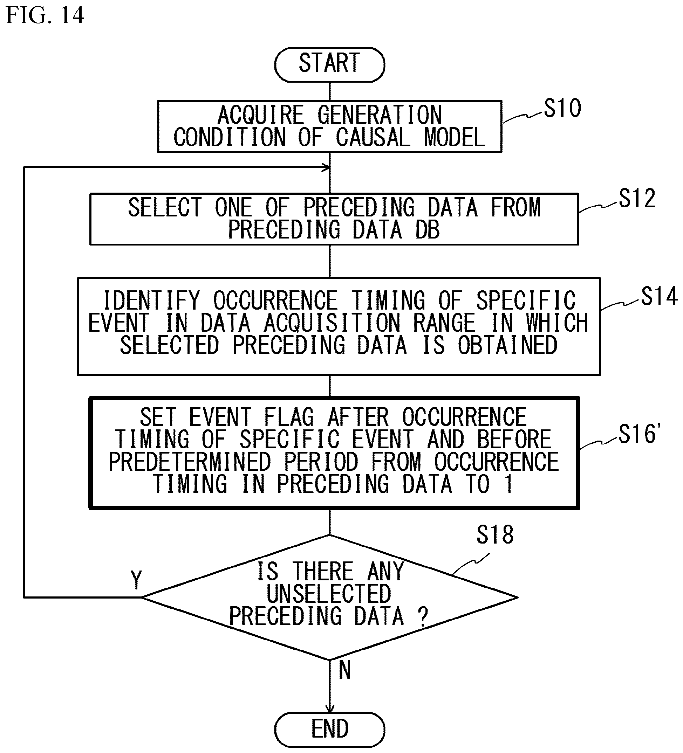

FIG. 14 is a flowchart illustrating the processing of the event occurrence timing identifying unit 12 in the second embodiment. In FIG. 14, processing different from that in the first embodiment (FIG. 9) is indicated by a bold frame.

When the processing of FIG. 14 is started, first, in step S10, the event occurrence timing identifying unit 12 acquires the generation condition of the causal model input by the user. Next, in step S12, the event occurrence timing identifying unit 12 selects one of the preceding data from the preceding data DB 32. Next, in step S14, the event occurrence timing identifying unit 12 identifies the occurrence timing of the specific event in the data acquisition range in which the selected preceding data is obtained. The processing up to S14 is the same as that of the first embodiment.

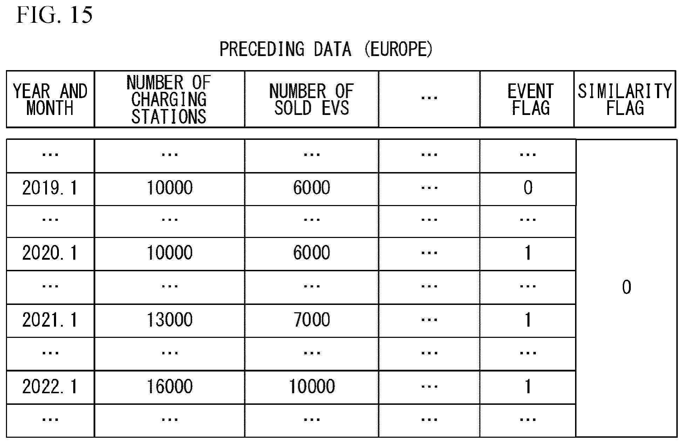

Next, in step S16', the event occurrence timing identifying unit 12 sets, to 1, the event flag after the occurrence timing of the specific event and before a predetermined period (one year in the present embodiment) from the occurrence timing of the specific event in the preceding data. For example, it is assumed that the occurrence timing of the specific event is identified as "January 2021" in the step S14. In this case, in the case of the preceding data (Europe) in FIG. 8, as illustrated in FIG. 15, all the event flags after January 2021 are set to "1", and the event flags up to January 2020, which is one year before January 2021, are also set to "1".

Thereafter, the same processing as that of the first embodiment is executed.

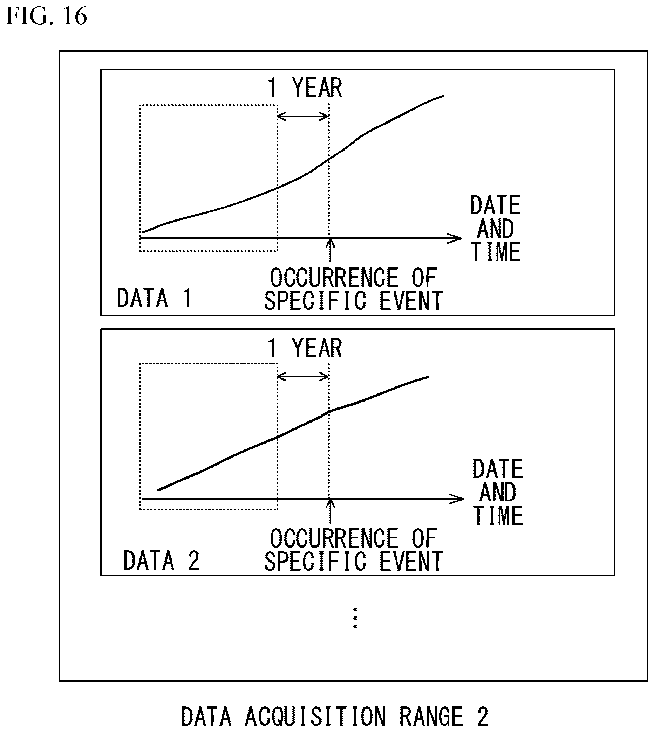

In the second embodiment, when comparing the similarity between the target data and the preceding data, as indicated by a broken line frame in FIG. 16, data in a period before a time point traced back by a predetermined period (for example, one year) from the timing at which the specific event occurred is used in the preceding data. Accordingly, even when the specific event occurs after the predetermined period from the present, the data acquisition range of the preceding data most similar to the data acquisition range of the target data can be appropriately identified. Therefore, it is possible to generate the causal model when the specific event occurs after the predetermined period from the present in the data acquisition range of the target data with high accuracy.

The processing functions described above can be realized by a computer. In this case, a program describing the processing contents of the functions that the processing device should have is provided. The program is executed by the computer, so that the processing functions are realized on the computer. The program describing the processing contents can be recorded in a computer-readable storage medium (excluding a carrier wave).

In the case of distributing the program, for example, the program is sold in the form of a portable storage medium such as a DVD (Digital Versatile Disc) or a CD-ROM (Compact Disc Read Only Memory) on which the program is recorded. The program may be stored in a storage device of a server computer, and the program may be transferred from the server computer to another computer via a network.

The computer that executes the program stores the program recorded in the portable storage medium or the program transferred from the server computer in its own storage device, for example. The computer reads the program from the own storage device and executes processing according to the program. The computer may read the program directly from the portable storage medium and execute the processing according to the program. Further, the computer may execute the processing according to the received program sequentially every time the program is transferred from the server computer.

The above-described embodiments are preferred examples of the present disclosure. However, the present disclosure is not limited to this, and various modifications can be made without departing from the scope of claimed invention.

## Claims

1. A causal model generation method that causes a computer to execute a process for generating a causal model when a specific event occurs in a first data acquisition range, the process comprising:
identifying a timing at which the specific event occurred in each of a plurality of second data acquisition ranges in which the specific event previously occurred (S14);
evaluating a similarity between a plurality of types of data acquired in each of the plurality of second data acquisition ranges in a focused period before an identified timing and a plurality of types of data acquired in the first data acquisition range (S30 - S42);
identifying a second data acquisition range that is most similar to the first data acquisition range in the plurality of second data acquisition ranges based on a result of the evaluating (S44); and
generating a causal model when the specific event occurs in the first data acquisition range using data acquired after the specific event occurs in an identified second data acquisition range (S50 - S56).

2. The causal model generation method according to claim 1, wherein each of the first data acquisition range and the second data acquisition range is a region, and occurrence of the specific event is execution of a predetermined measure.

3. The causal model generation method according to claim 1 or 2, wherein assuming that the specific event occurs after a first time period elapses in the first data acquisition range, the focused period is a period before a time point traced back by the first time period from a timing at which the specific event previously occurred in each of the plurality of second data acquisition ranges.

4. The causal model generation method according to claim 1, wherein in the evaluating the similarity, an average absolute error between the data acquired in the second data acquisition range and the data acquired in the first data acquisition range is calculated for each type of data, and a calculated average absolute error is used for evaluation of the similarity.

5. The causal model generation method according to claim 4, wherein in the evaluating the similarity, data having a correlation with a predetermined type of data equal to or greater than a predetermined threshold value in the plurality of types of data is selected as data to be used when the average absolute error is calculated.

6. The causal model generation method according to any one of claims 1 to 3, wherein in the evaluating the similarity, an average absolute error between the data acquired in the second data acquisition range and the data acquired in the first data acquisition range is calculated for each type of data, and a weighted average value using a calculated average absolute error and a weight coefficient predetermined for each type of data is used for evaluation of the similarity.

7. The causal model generation method according to any one of claims 1 to 3, wherein in the evaluating the similarity, an average absolute error between the data acquired in the second data acquisition range and the data acquired in the first data acquisition range is calculated for each type of data, and a weighted average value using a calculated average absolute error and a weighting coefficient based on a variance of the data for each type of data is used for evaluation of the similarity.

8. A causal model generation program that causes a computer to execute a process for generating a causal model when a specific event occurs in a first data acquisition range, the process comprising:
identifying a timing at which the specific event occurred in each of a plurality of second data acquisition ranges in which the specific event previously occurred (S14);
evaluating a similarity between a plurality of types of data acquired in each of the plurality of second data acquisition ranges in a focused period before an identified timing and a plurality of types of data acquired in the first data acquisition range (S30 - S42);
identifying a second data acquisition range that is most similar to the first data acquisition range in the plurality of second data acquisition ranges based on a result of the evaluating (S44); and
generating a causal model when the specific event occurs in the first data acquisition range using data acquired after the specific event occurs in an identified second data acquisition range (S50 - S56).

9. The causal model generation program according to claim 8, wherein assuming that the specific event occurs after a first time period elapses in the first data acquisition range, the focused period is a period before a time point traced back by the first time period from a timing at which the specific event previously occurred in each of the plurality of second data acquisition ranges.
